# EUROPEAN PATENT APPLICATION

(11) **EP 4 668 764 A2**
(43) Date of publication of application: **24.12.2025**
(21) Application number: 25214301.1
(22) Date of filing: 20.10.2023
(51) Int. Cl.: H04N 21/61

(54) **TRANSMISSION SYSTEM**

(62) Divisional of application: 23204865.2
(71) Applicant: ST Engineering iDirect (Europe) Cy NV, 9100 Sint-Niklaas (BE)
(72) Inventor: DUYCK, Dieter, 9100 Sint-Niklaas (BE); DUPUY, Arthur, 79400 Saint Maixent l'Ecole (FR); VAN WONTERGHEM, Johannes, 9880 Aalter (BE); CUNAT, Christophe, 92160 Antony (FR)
(74) Representative: Winger

(57) **Abstract**

The present invention relates to a transmission system (1) for generating a signal to be transmitted via one or more physical carriers to a plurality of earth station receivers of a satellite communication system. The transmission system comprises
- encoding means (10) arranged to convert per physical carrier a single stream of baseband frames each associated to a modulation and coding, modcod, into a single stream of XFEC frames according to the DVB-S2X standard,
- framing means (20) arranged to convert per physical carrier the single stream of XFEC frames to a single stream of IQ symbols comprising one or more superframes according to the DVB-S2X standard, each superframe comprising at least a superframe preamble,
- modulation means (30) arranged to convert per physical carrier the single stream of IQ symbols at a physical carrier symbol rate into IQ samples.

The transmission system further comprises a superframe placer (5) to attach to the single stream of baseband frames or the single stream of XFEC frames metadata indicating to the framing means when a superframe preamble needs to be inserted in the stream of IQ symbols composed in the framing means.

## Description

### Field of the invention

The present invention is generally related to the field of satellite communication systems.

### Background of the invention

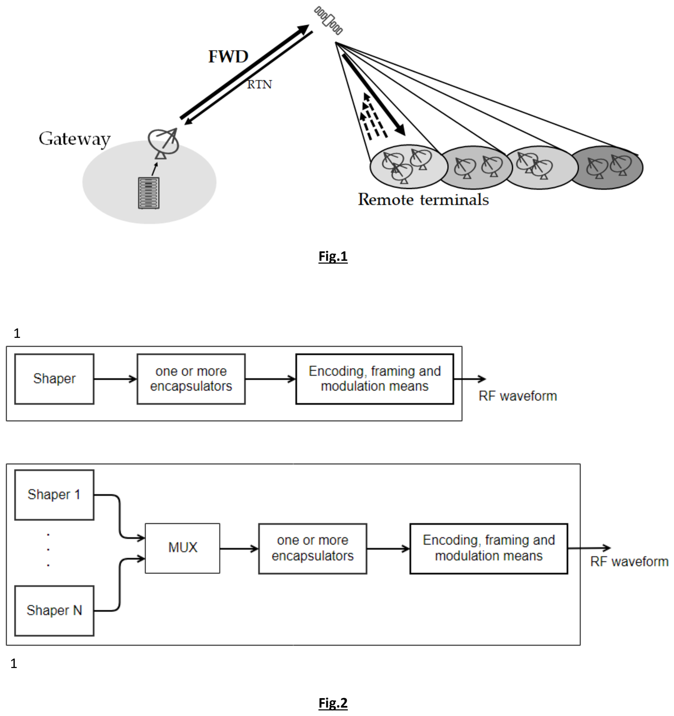

A typical realization of a satellite communication network is based on a star network in which a transmitter at the gateway transmits in the so-called forward (FWD) link via the satellite to multiple terminals. In the case of interactive communication, the terminals transmit back in the so-called return (RTN) link via the satellite towards a receiver at the gateway. This is visualized in Fig.1. If needed (e.g., if the bandwidth required in the forward link is larger than the bandwidth that can be transmitted from a single transmitter) more transmitters and/or receivers are used at the gateway. A satellite can be beam hopping or non-beam hopping. The gateway terminates links to or from the terminals in the access network and typically also connects to a terrestrial data transport network; in a traditional bent-pipe satellite communications system the gateway is located entirely in the ground segment; in a regenerative satellite communications system the termination of satellite links to the terminals is devolved to a gateway proxy on-board a satellite and separate feeder links and possibly inter-orbit links (not discussed in this description) relay data between the gateway proxy and terrestrial data networks.

In the forward link of a star network wherein few gateway transmitters transmit to typically many terminals, the data or traffic for a given terminal, which is located in a given contour, is output from a processing means (e.g., one or more processors or servers) towards the modulator, typically over an Ethernet cable. The modulator can be implemented on an FPGA on a device, or modulator functions can be spread across several devices or servers, like a central unit, distributed unit and remote unit such as in 3GPP.

The data stream is the result of a multiplexing of data for many terminals. In that multiplexing operation, multiple criteria are considered, such as for example the amount of traffic needed by all terminals, their specific rate plan, fairness etcetera. Various Quality-of-Service (QoS) architectures can be used. In one approach, the receive terminals to which the traffic can potentially be combined in a single physical layer (PL) frame, are grouped in a satellite network, referred to as a satnet. Alternative solutions are, however, readily available. In case receive terminals are grouped in a satnet, these terminals decode a same carrier at the same time in a same contour. The process to pack/combine packets for multiple terminals in "frames" is called shaping and encapsulation. In the case of DVB-S2X, the frames are baseband frames which are in the modulator mapped to PL frames. In the case of another standard, the frames can be called differently. More specifically, the modulator comprises encoding, framing and modulation means which encode the baseband frames into XFEC frames, frame the XFEC frames into physical layer frames comprising complex-valued symbols (at a rate equal to the physical carrier symbol rate) and finally modulate the PL frames into an RF signal (typically with a 3dB bandwidth equal to the physical carrier symbol rate when using Nyquist signalling).

Two of the components comprised in the satnet processing means are referred to as a shaper and an encapsulator, respectively. The process performed by these two components is referred to as shaping-encapsulation, as discussed, e.g., in WO2006/099695. The average speed or rate at which such frames are sent to the modulator, depends on the average rate at which data for this satnet is transmitted over the air (typically equal to a symbol rate of a transmitted carrier or a fraction thereof, e.g., in the case of time slicing, see DVB-S2 Annex M or DVB-S2X Annex M) or in the case the throughput of the shaping and encapsulation means cannot fill the entire carrier and more than one shaping encapsulation means are used. The average symbol rate shaped by the satnet processing means is referred to as the satnet size. Multiple encapsulators may be present after a shaper. For instance, MPE (MultiProtocol Encapsulation) decapsulation can be used for signalling and GSE (Generic Stream Encapsulation) decapsulation can be used for data. Different input stream identifiers (included in the baseband frame headers) can be assigned to frames from different encapsulators to allow terminals to distinguish the different streams from each other after decoding.

Shaping and encapsulation need not necessarily be performed on the same processing means. E.g., encapsulation can also be performed on the modulator firmware while shaping can take place on a server. In some cases the encapsulation is done outside of the modulator firmware. Other options are illustrated in Fig.2 (also highlighting there can be more than one encapsulator per shaper), making abstraction of the physical unit where the operation is performed.

Time slicing was standardized In ETSI EN 302 307: "Digital Video Broadcasting (DVB); Second generation framing structure, channel coding and modulation systems for Broadcasting, Interactive Services, News Gathering and other broadband satellite applications", annex M) and also in ETSI EN 302 307-2 V1.1.1 (2014-10) : "Digital Video Broadcasting (DVB); Second generation framing structure, channel coding and modulation systems for Broadcasting, Interactive Services, News Gathering and other broadband satellite applications; Part 2: DVB-S2 Extensions (DVB-S2X)". In the sharing mechanism implemented by time slicing, receivers only decode frames which have a frame tag or slice number associated to the group of receivers the frames belong to. This allows a receiver to only decode the physical layer header of a physical layer frame to decide whether it is required to further demodulate and decode the entire frame or not.

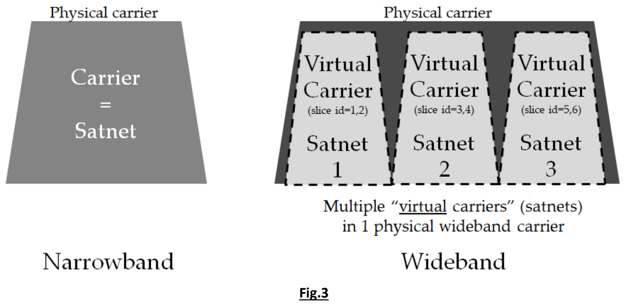

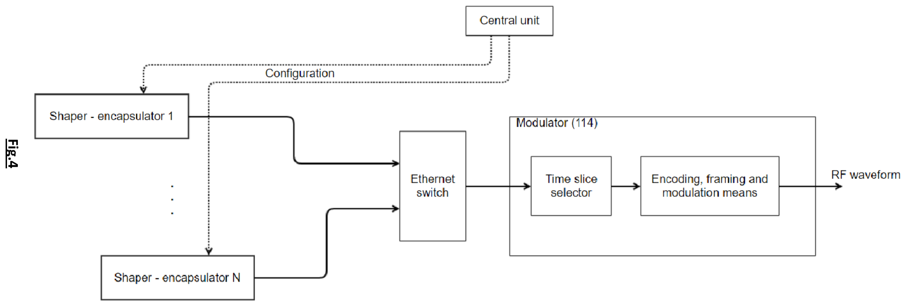

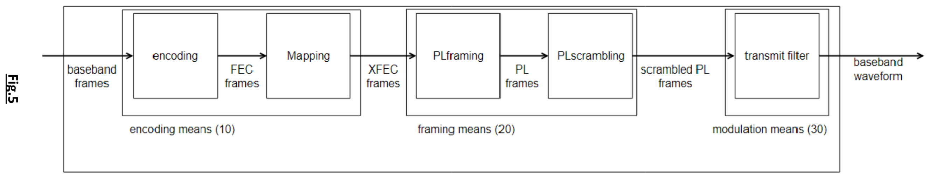

In WO2020/065043 A1 and US2023/123805, a modular, simple, high efficiency and cost-efficient method is described to exploit time slicing. Per satnet, a shaper-encapsulator shapes a symbol rate of a virtual carrier. There are one or more virtual carriers in a physical carrier. The sum of the symbol rates of the virtual carriers is smaller than or equal to the symbol rate of the physical carrier, as visualized in Fig.3. An input block, called a time slice selector, in the modulator buffers the baseband frames burst to the modulator from each of the shaper-encapsulators and multiplexes those frames onto a single stream of baseband frames that is encoded, framed and modulated by the encoding, framing and modulation means. One of the tasks of the time slice selector is to avoid any throughput constraint imposed on each of the time slices without creating too much latency for any of the input streams. Fig.4 visualizes such an architecture. In the example of Fig.4 the shaper-encapsulator means are configured by a central unit. Via an Ethernet switch the baseband frames output from the shaper-encapsulators are fed to a modulator (114) comprising the time slice selector and encoding, framing and modulation means. The encoding, framing and modulation means are shown in Fig.5. Encoding typically comprises encoding information bits to a FEC frame of coded bits (according to a FEC code, referred to by "cod" in modcod) and mapping that FEC frame to an XFEC frame of IQ symbols (according to a mapping constellation, referred to by "mod" in modcod).

Inside the modulator, also dummy data (e.g., data generated from a PRBS generator, which is sufficiently random in order not to harm the signal spectrum; this data will not be decoded by any terminal) is multiplexed with the data stream to fill the carrier. I.e., in order to avoid overflow of queues, the data rate is slightly smaller than the symbol rate, with the consequence that from time to time dummy data must be sent to achieve a given symbol rate, see for example the insertion of dummy frames in ETSI EN 302 307-1: "Digital Video Broadcasting (DVB); Second generation framing structure, channel coding and modulation systems for Broadcasting, Interactive Services, News Gathering and other broadband satellite applications; Part I (DVB-S2)", Sec 5.5.1). The encoding, framing and modulation means are in general not aware of which bits are to be sent to which contour. It just receives bit sequences (e.g., DVB-S2 baseband frames) which it encodes, maps to symbols, frames, scrambles and pulse-shapes to a waveform which is modulated onto a carrier frequency. The modulation means comprising a transmit filter or pulse shaper requests symbols at the symbol rate. If no frame is available (because the data rate is slightly smaller than the symbol rate), dummy data is provided to the pulse shaper. The dummy data may be, e.g., a frame of dummy symbols in the case of DVB-S2, or dummy symbols or dummy frames of any type in the case of a DVB-S2X super frame.

A continuous transmit signal from the transmission system is necessary because, in the forward link, the satellite is typically in automatic level control (ALC) mode, which is scaling the input signal to maintain a constant power towards the satellite amplifier. In this operational mode it is not allowed that the input signal to the satellite be dropped, which explains why it is required to "fill" the forward carrier with dummy data as mentioned above.

WO2020/065043 A1 discloses how to deal with dummy frames in the case of time slicing and virtual carriers. More specifically, the time slice selector can orchestrate insertion of dummy frames in some cases.

Recent evolutions in the DVB-S2X standard have revealed new features or capabilities like burst acquisition (e.g. for beam hopping or precoding, from a terminal point of view, only a fraction in time of the FWD link signal has a good SNR and should be received by doing a burst acquisition on that fraction in time), "low power receivers" (relevant for loT applications for instance; also exploiting burst acquisition to only demodulate the frames it needs, so saving power), VLSNR reception (i.e., terminals experiencing a very low (VL) signal to noise ratio (SNR) can still demodulate and decode information).

More specifically, in ETSI EN 302 307-2 (DVB-S2X) and ETSI TR 102 376-2 (guidelines DVB-S2X), e.g., version 1.2.1, the concept of superframes (SF) is introduced, coming in different superframe formats (SFF) targeted to different applications, but with overarching principles and signalling elements for receiver addressing and synchronization. The SFs in those standards transport variable length physical layer frames (PL frames) as defined originally in ETSI EN 302 307. This means strings of symbols (PL frames) are obtained after mapping coded bits from one codeword (64800 or 16200 coded bits obtained after encoding a so-called baseband frame of information bits) to data symbols multiplexed with known symbols and a (short) preamble (including known symbols and signalling) denoted a PL header.

The superframes in ETSI EN 302 307-2 and ETSI TR 102 376-2 have a start-of-superframe (SOSF) field, which is used in the terminal receiver to detect the start of a superframe. Next to the SOSF, the superframe preamble also always comprises the superframe format (SFF) indicator (SFFI). The superframe preamble is a big sequence of configurable but, once configured, "known" symbols that can be used for acquisition, for instance, to allow for burst demodulation of the superframe or channel estimation. They can have superframe pilots (SF-Pilots) which the receiver uses for carrier tracking, i.e., for the recovery of the reference phase (and possibly reference level) for demapping and decoding of terminal data symbols.

In SFF5 (superframe format 5) and SFF6 (superframe format 6), the SOSF and SFFI are followed by a superframe header (SFH, equal to EHF and PLI for format 6, and determined by the PLI, pilots on/off, pointer to the first PLHeader and 2 user bits for format 5). SFF5 allows for fragmentation of a physical layer frame over different superframes. According to the standard and the guidelines, SFF5 explicitly targets beam hopping (BH) applications where constraints on the superframe length may arise. Allowing fragmentation of a PL frame over more than one superframe avoids the need for padding when requiring a particular superframe length to be obtained, thus decreasing the overhead.

In ETSI EN 302 307-2 and ETSI TR 102 376-2 the SOSF and SF-aligned pilot fields are taken from a set of near-orthogonal symbol sequences, known as Walsh-Hadamard (WH) codes optionally plus some padding. There are 256 possible quasi-orthogonal SOSF fields, determined by an SOSF-index (or SOSF-ID) (corresponding to a row number in a 256-by-256 WH matrix). Under aligned superframes across interfering carriers, the SF-aligned pilots are then also aligned across interfering carriers. The near-orthogonality helps to preserve the performance in the tasks assigned to these fields in the presence of interference. The SOSF and SF-Aligned pilots are scrambled by the reference scrambling index. The other fields (such as the SFFI, the SFH, the PLHeaders, VLSNR pilots, the postamble, XFEC frames (the payload) are scrambled by the payload scrambling index. Therefore, the prior art solutions require the reference scrambling index (which is scrambling the SOSF and SF-aligned pilots) to be identical across interfering carriers, exactly to preserve near-orthogonality of the SF-aligned pilots. In fact, the two-way scrambling, introduced with the introduction of superframes to DVB-S2X, was introduced partly for that reason. To have near-orthogonality of the scrambled SOSF field, recalling that the reference scrambling index is the same across interfering carriers, the prior art solutions impose different SOSF indices to be chosen for each of the interfering carriers.

Finally, per superframe a protection level can be set, which determines how much the PL headers from all PL frames in the superframe are spread (a factor 2 for PLI 1 and a factor 5 for PLI 2) and which determines the inclusion of longer pilot sequences, called VLSNR pilots. The more robust the protection level is set in a particular superframe, the lower the SNR under which terminals can still demodulate the PL frames. Obviously, the more robust the protection level, the more overhead is included.

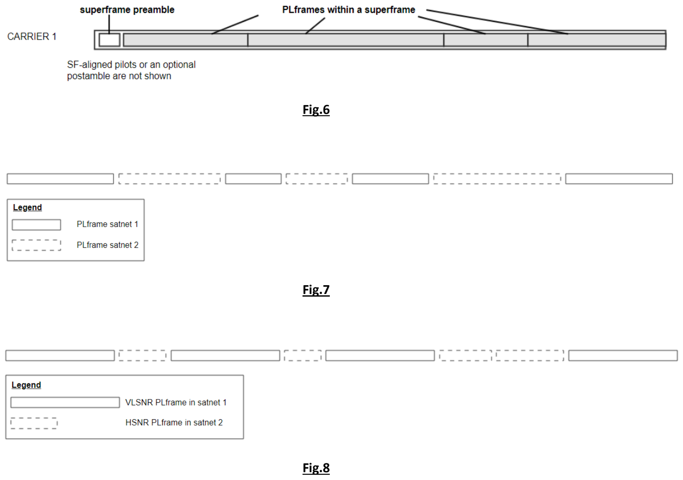

SFs are not needed without the need for burst acquisition (e.g., for beam hopping), without the need for interference estimation, without the need to save power or without VLSNR transmission. One then can also choose not to contain the PL frames within SFs and use the so-called regular DVB-S2X standard (without Annex E, which is specifying SFs). A visual representation of SFs containing a preamble and PL frames is shown in Fig.6.

In communication networks, traffic, for instance Internet traffic, is always directed to where it is needed. Static communication satellite payloads achieve this by constantly illuminating the coverage area, even at times when less communication traffic is requested, thereby not efficiently exploiting the available physical resources. Instead, beam hopping offers the flexibility to dynamically redirect during operation payload resources (i.e., power, frequency, time) to the geographic locations, where receivers are requesting communication traffic at a certain moment in time. Beam hopping in satellite communications aims to increase the flexibility to direct communication traffic to the receivers (i.e., to the contours on earth where the receivers are located) where and when needed. A single beam hopper in a beam hopping satellite illuminates multiple contours on earth one after another. For example, assume there are three contours C1, C2 and C3. Then a possible sequence of illumination is, e.g., C1 C1 C2 C3 C2 C1 C3 C3 C1 C2. The sequence is periodically repeated. In this example, receivers in contour C1 get access to more satellite resources than those in contours C2 or C3. This way, flexible satellite resource allocation to contours is possible, which opens a whole range of market opportunities (e.g., sending more traffic to hot spots). The plan describing the sequence C1 C1 C2 C3 C2 C1 C3 C3 C1 C2 is called the hopping plan. The minimum time duration that a contour is being illuminated, is called a hopping slot. A contour can be illuminated for any time duration equal to an integer multiple of the hopping slot. The hopping plan can be dynamic, i.e., it can be changed by the satellite operator to adjust to new traffic needs of the customers. The time duration of the transmission to the sequence of contours corresponding to a particular hopping plan is referred to as the hopping period. Multiple beam hoppers can be present in a beam hopping satellite.

Typical order of magnitudes of the parameters applicable to beam hopping are provided as an example. A typical carrier symbol rate is 500 Mbaud, which corresponds to a symbol time of 0.002 µs or 2 ns. A DVB-S2X (super)frame (as defined in ETSI EN 302 307-2: "Digital Video Broadcasting (DVB); Second generation framing structure, channel coding and modulation systems for Broadcasting, Interactive Services, News Gathering and other broadband satellite applications; Part II (DVB-S2X)") can have a length in the order of 20 000 (600 000) symbols, resulting in a frame duration of around 40 µs (1.2 ms). A hopping period typically is around 250 ms.

To ensure an uninterrupted service, the transmitter on the ground (or in general the ground segment, which may comprise multiple transmitters) needs to properly time align the transmitted signal corresponding to a particular contour with the illumination of that contour by the beam hopping satellite. For example, the transmitted signal corresponding to contour C2 needs to arrive at the satellite during the time the satellite is illuminating contour C2. WO2019/233684 A1 describes a method to implement this.

Consider a physical carrier containing two or more virtual carriers. Hence, the physical carrier is received by two groups of terminals, each representing a satnet. The first group, satnet 1, demodulates and decodes the first virtual carrier and the second group, satnet 2, demodulates and decodes the second virtual carrier. Fig.7 shows a typical alternation of PL frames (without superframes) from both satnets by applying the techniques from WO2020/065043 A1. Shaping and encapsulation means burst baseband frames to a modulator. The transmission system can be implemented on a single device or across several processing units. The modulator can interleave the baseband frames prior to encoding, framing and modulation to avoid too high a throughput in a virtual carrier at the decoder side. Each satnet is associated to a set of one or more time slice numbers. The time slice number is encoded in the PL header of the PL frame. The length of the PL frames depends on the modulation order. The lower the modulation order, the longer the length. E.g., a QPSK frame has a longer length than a 16-APSK frame. A QPSK frame with spreading (i.e., a VLSNR modcod) has a longer length than a QPSK frame without spreading. The lengths shown in Fig.7 are obviously purely indicative. What matters is that there are longer and shorter frames. From the figure, it is clear that PL frames from satnet 1 and 2 are interleaved, for example to avoid a too high instantaneous throughput per satnet. In the case of associating more than one time slice number per satnet, e.g., two time slice numbers, PL frames per satnet can be grouped (e.g., in pairs), but groups of PL frames from one satnet are still interleaved with groups of PL frames from the second satnet, so the principle shown in Fig.7 remains valid.

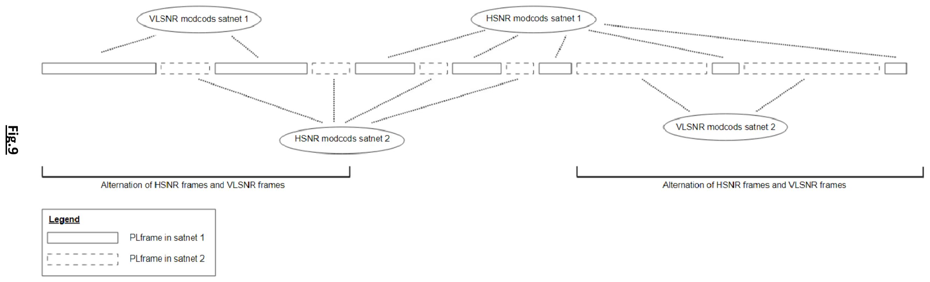

A case is considered where some terminals have VLSNR conditions (e.g., due to small antennas or a fade experienced by those terminals due to a cloud between them and the satellite). However, there are also other terminals with a higher SNR (HSNR) who can demodulate and decode PL frames with a more efficient modcod (which also means they have a higher quasi-error free SNR threshold, i.e., they require a higher SNR to be demodulated and decoded without errors). Fig.8 shows an interleaving of PL frames from two satnets, where one satnet has VLSNR modcods and the other has no VLSNR modcods. A possible use case is for example a satellite network with only fishing boats (featuring a small antenna, with a low link budget allowing only VLSNR modcods) and another satellite network with only one or more cruise ships (featuring a large antenna, with a high link budget, allowing higher modcods). From the figure, it is clear that VLSNR and HSNR frames are interleaved by applying the interleaving of PL frames belonging to different satnets shown above. Another use case is for example two satellite networks, each with a mixture of fishing boats and cruise ships. Each satnet will be served by a shaper/encapsulator bursting baseband frames associated to modcods. The times at which those shapers/encapsulators burst frames to the modulator are independent from each other and thus typically different. Fig.9 shows an interleaving of PL frames according to that scenario, by applying the approach described in WO2020/065043 A1.

Superframes can be used to allow the terminals to lock on the physical carrier and demodulate and decode a fraction of the PL frames contained in the superframe, namely those PL frames corresponding to VLSNR modcods with a quasi-error free SNR threshold lower than the SNR experienced by those terminals. Superframe placement is thereby required, i.e., a method that determines (1) how PL frames are combined in a superframe and (2) the number of PL frames (or, in the case of format 5, more correctly the number of capacity units (CUs)) per superframe.

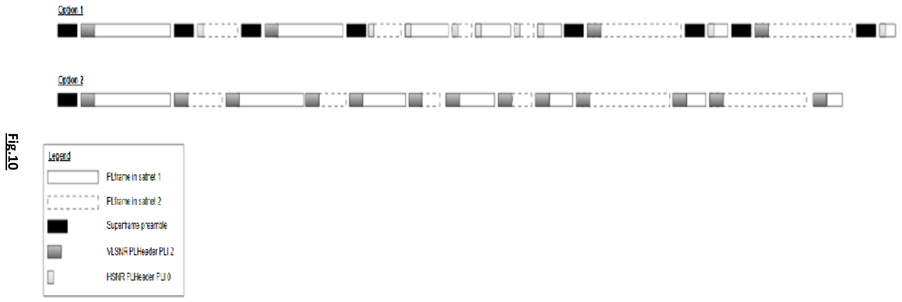

For the above scenario, Fig.10 shows the outcome for two possible superframe placement methods. A scenario wherein VLSNR and HSNR frames are interleaved, as depicted in Fig.9, can easily occur. Under this interleaving, a first method of superframe placement is to put the PL frames each time in a separate superframe, resulting in too much overhead from the superframe preamble. The second method puts the PL frames in the same superframe, resulting in too much overhead from the PL header for HSNR frames because of the unneeded spreading of the PL header for those frames which are demodulated and decoded by terminals in HSNR conditions. From this observation, it can be concluded that there are two problems. First, both methods are not efficient, as they each have a lot of overhead. Furthermore, the achieved efficiency also depends on the modcods in the other satnet and is thus not predictable for the shaping and encapsulation means of the current satnet. Hence, a worst case efficiency has to be assumed by the shaper-encapsulator to avoid a buffer or storage overflow in the modulator. Overall this results in too bad an efficiency.

There is no prior art hinting at a solution to this problem. There is thus a need for a superframe placement method and transmission system architecture resulting in an efficient (with predictable efficiency) combination of shaping-encapsulation, virtual carriers and superframe based transmission.

Also with a single virtual carrier, there can still be a mixture of VLSNR and HSNR frames, for example as a consequence of having terminals with different link budgets (e.g., at the edge of the beam the SNR is typically 5 dB lower than at the centre of the beam, or by mixing terminals with different antenna sizes). So, also for a single virtual carrier there is a need for a superframe placement method and transmission system architecture resulting in an efficient (with predictable efficiency) combination of shaping-encapsulation and superframe based transmission.

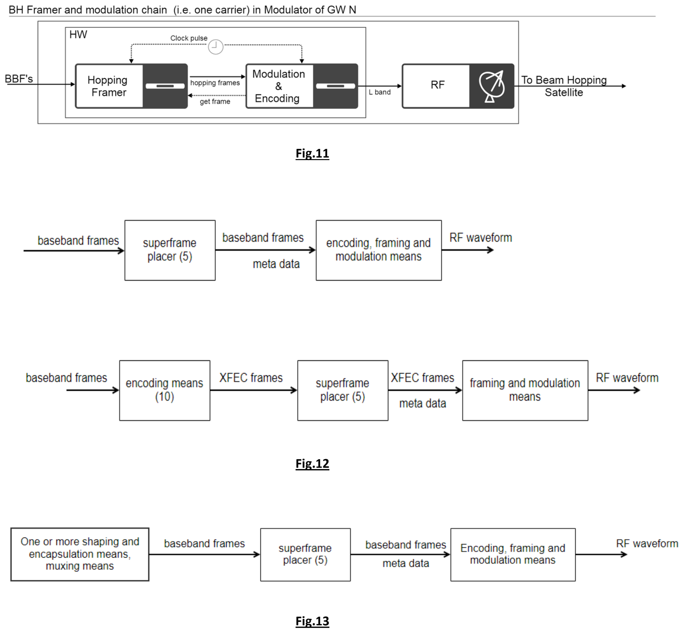

In addition to the previously described scenario of more than one satnet served by a physical carrier, that carrier may further be sent to the terminals over a beam hopping satellite. This also implies that, during a hopping slot, only the satnets in a cell being illuminated shall be served. WO2019/233684 A1 hints at a hopping framer per physical carrier, each hopping framer arranged for receiving a sequence of bits and for organizing the sequence into a hopping frame according to a hopping plan indicating an order in which the plurality of contours is to be illuminated. The hopping framer inserts an amount of dummy data as needed. This is illustrated in Fig.11.

In the case of precoding, there can be several groups of terminals that are precoded with a different precoding matrix. Hence, when a certain group is served, only PL frames for that group shall be contained in a superframe. This could also be done through a precoding framer, similar to the hopping framer above.

However, WO2019/233684 A1 does not specify how that hopping or precoding framer and time slice selector (see Fig.4) need to be combined and how that would be most efficient. The superframe placement method should thus also perform adequate multiplexing of PL frames in the superframe to adhere to the hopping frame or precoding frame.

There is thus a need for a superframe placement method and transmission system architecture resulting in an efficient combination (with predictable efficiency) of shaping-encapsulation, virtual carriers and superframe based transmission, for non-beamhopping and beamhopping or non-precoded or precoded links.

### Summary of the invention

It is an object of embodiments of the present invention to provide for a transmission system adapted for providing to a framer an indication when to insert a superframe preamble.

The above objective is accomplished by the solution according to the present invention.

In a first aspect the invention relates to a transmission system arranged for generating a signal to be transmitted via one or more physical carriers to a plurality of earth station receivers of a satellite communication system. The transmission system comprises :
- encoding means arranged to convert per physical carrier a single stream of baseband frames each associated to a modulation and coding, modcod, into a single stream of XFEC frames according to the DVB-S2X standard;
- framing means arranged to convert per physical carrier the single stream of XFEC frames to a single stream of IQ symbols according to the DVB-S2X standard, said single stream of IQ symbols comprising one or more superframes according to the DVB-S2X standard, each superframe comprising at least a superframe preamble;
- modulation means arranged to convert per physical carrier the single stream of IQ symbols at a physical carrier symbol rate into IQ samples to generate the signal to be transmitted.

The transmission system is characterised in that it further comprises a superframe placer arranged to attach to the single stream of baseband frames or the single stream of XFEC frames metadata indicating to the framing means when a superframe preamble needs to be inserted in the stream of IQ symbols being composed in the framing means.

The proposed solution indeed allows for providing an indication to the framer where a superframe preamble is to be inserted. Due to the superframe placer in the transmission system metadata can be attached to the single stream of baseband frames or of XFEC frames, the metadata indicating to the framing means when insertion of a superframe preamble is needed. As described in detail below, the position of the superframe placer in the transmission system can vary from embodiment to embodiment.

In a preferred embodiment at least one of the physical carriers comprises one or more substreams of baseband frames and the transmission system comprises means for shaping and encapsulation arranged for outputting one or more substreams of baseband frames, each baseband frame in the one or more substreams being associated to a modcod, each of the substreams comprising data traffic to a different subset of earth station receivers, so obtaining for each subset one of the substreams.

In an embodiment wherein at least one of the physical carriers comprises more than one substream of baseband frames, the transmission system advantageously comprises more than one means for shaping and encapsulation and multiplexing means to multiplex the baseband frames of the substreams from each of the means for shaping and encapsulation to the single stream of baseband frames that is fed to the encoding means or the superframe placer.

Optionally the transmission system comprises more than one means for shaping and encapsulation and the modulation means further comprises a substream selector arranged for receiving and storing the plurality of baseband frames of the one or more substreams outputted by the means for shaping and encapsulation, for selecting a stored baseband frame of the one or more substreams from a list of allowable substreams as next frame to be multiplexed on the single stream of baseband frames, said substream selector providing the single stream of baseband frames. Preferably the selected baseband frame is the baseband frame from the list of allowable substreams that was stored longest ago.

In preferred embodiments the modcods are arranged in at least two groups, each group having an associated protection level indication. Advantageously, the metadata then comprises the protection level indication for the at least two groups.

In one embodiment the means for encapsulation is/are arranged to output burst signals wherein baseband frames in each of the bursts are ordered in terms of robustness.

Advantageously, the framing means is arranged to insert a new superframe preamble when a superframe comprising an XFEC frame with a modcod from one of the groups ends and a subsequent superframe comprises an XFEC frame with a modcod from another group and a protection level indication associated to said other group of modcods is detected in said metadata.

In a preferred embodiment the framing means is arranged to insert a shortened dummy type B frame before inserting a new superframe preamble in order to adhere to a superframe length being a multiple of a predefined number. In one embodiment the predefined number is 16 CUs or 1476 symbols.

In some embodiments the insertion of dummy type B frames to adhere to a superframe length being a multiple of the predefined number is done only for superframes with a protection level different from 2.

In another embodiment one or more of the one or more physical carriers are arranged to serve consecutively in time disjunct sets of terminals, each of the disjunct set of terminals arranged to demodulate and decode one or more of the substreams and associated to a superframe lock parameter set, wherein there is at least one superframe parameter different between two superframe lock parameter sets and wherein the metadata comprises an indication of which superframe lock parameter set to use.

In a preferred embodiment the superframe placer is positioned between the substream selector and the encoding means. The superframe placer is advantageously arranged to indicate to the substream selector that only substreams in an allowed subset of substreams according to a configurable time plan are allowed.

In a preferred embodiment the transmission system has more than one physical carrier and is arranged to align in time the moment when the superframe preamble is inserted in each of the physical carriers and the IQ symbols are precoded with a precoding matrix based on the substreams associated to the in time aligned superframes.

In one embodiment the disjunct sets of terminals each correspond to a different cell of a plurality of cells to be illuminated consecutively in time by a beam hopping satellite according to a beam hopping plan, and the superframe placer is configured with the given time plan corresponding to the beam hopping plan indicating an order in which the plurality of cells is to be illuminated.

In some embodiments the superframe lock parameter set comprises at least a Start-of-Superframe ID and the protection level indication (or a reference scrambling index).

In certain embodiments the metadata comprises an indication to the framing means that a superframe postamble is to be inserted before transitioning from one subset of substreams to another subset of substreams.

The superframe placer is in some embodiments physically separated from the encoding, framing and modulation means.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a basic scheme of a satellite communication network.
Fig.2 illustrates some possible implementations of the means for shaping and encapsulation as known in the art.
Fig.3 illustrates a physical carrier comprising virtual carriers.
Fig.4 illustrates a modulator comprising a time slice selector and encoding, framing and modulation means.
Fig.5 illustrates a basic scheme of an encoding means, framing means and modulation means.
Fig.6 illustrates a superframe comprising a superframe preamble and a number of physical layer frames.
Fig.7 illustrates the alternation of physical layer frames between two satnets.
Fig.8 illustrates an interleaving of PL frames from two satnets, where one satnet has VLSNR modcods and the other satnet not.
Fig.9 illustrates an interleaving of PL frames from two satnets.
Fig.10 illustrates the superframe placement problem addressed in the present invention.
Fig.11 illustrates a hopping framer and modulator chain.
Fig.12 illustrates a superframe placer positioned before the encoder (top) and a superframe placer between the encoder and the framer (bottom).
Fig.13 illustrates a stream of baseband frames being output from shaping and encapsulation means to a modulator.
Fig.14 illustrates more than one shaping and encapsulation means connected with the modulator via multiplexing means.
Fig.15 illustrates a superframe placer positioned between a substream selector and the encoding, framing and modulation means.
Fig.16 illustrates the use of a superframe placer in a beam hopping scenario or in a scenario where precoding is applied.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a transmission system for generating a signal to be transmitted via one or more physical carriers to a plurality of earth station receivers of a satellite communication system. In the transmission system a superframe placer is provided in an advantageous way. The transmission system (also sometimes referred to as gateway transmitter) may in some embodiments be part of an earth station gateway, whereas in other embodiments the transmitter may be located in a regenerative satellite. The invention is not limited to either of the two. The invention is neither limited to a particular hardware architecture or to a Quality-of-Service (QoS) architecture.

First a general use case is considered, not necessarily with beam hopping or precoding. The transmission system needs to output a waveform comprising superframes to allow for one or more of the following desired properties that are achievable thanks to superframes: burst acquisition (e.g., for beam hopping or precoding or lower power reception) or VLSNR (very low signal-to-noise ratio) communication. As always, the transmission system needs to pulse shape a stream of IQ symbols at a physical carrier symbol rate to a stream of IQ samples. Therefore, the transmission system requests IQ symbols to the framing means. The framing means is therefore arranged to convert per physical carrier a single stream of XFEC frames to a single stream of IQ symbols according to the DVB-S2X standard. The single stream of IQ symbols comprises one or more superframes according to the DVB-S2X standard, each superframe comprising at least a superframe preamble. The framing means must thus know when to insert the superframe preamble. Thus, an indication needs to be attached to the stream of XFEC frames indicating when to insert a superframe preamble. The XFEC frames are obtained by encoding and mapping baseband frames according to the modcod associated to the baseband frame. Therefore, in order to provide to the framer an indication when to insert a superframe preamble, a superframe placer is introduced which is, amongst other things, responsible for the decision when to start a new superframe. The superframe placer can do so by attaching metadata to the stream of baseband frames or to the stream of XFEC frames. So, it is possible that the superframe placer is located after the encoding means and before the framing means, or before the encoding means, as shown on Fig.12. It will be shown later in the description that in a preferred embodiment for certain use cases the superframe placer is located before the encoding means.

The invention is, however, not limited thereto. For instance, a limitation can be imposed on the receiver that the latter needs to see at least one superframe preamble every given period of time, for synchronization reasons (e.g., not to let the frequency offset drift too much, e.g., in the absence of superframe pilots). This may then be enforced by the superframe placer. In another embodiment, a new superframe needs to be started when serving terminals in another coverage in the case of beam hopping, which can also be enforced by the superframe placer. In yet another embodiment, a new superframe needs to be started when starting to serve one or more terminals that are precoded by another precoding matrix than the terminals currently being served. In another embodiment, a new superframe must be started when an adjustment of the protection level indication (PLI) is needed. All these examples illustrate the need for an entity to decide when to start a new superframe, being the superframe placer.

For instance, consider first where all receivers demodulate and decode all non-dummy frames in a physical carrier. So, there is only 1 satnet in the physical carrier. The stream of baseband frames to a satnet will be denoted a "substream" of baseband frames. So first the use case with a single substream (said substream also denoted a "virtual carrier") is considered. The substream of baseband frames, with each baseband frame associated to a modcod, is output from shaping and encapsulation means to the modulator, as shown in Fig.13. In this first use case, the substream is equal to the single stream of baseband frames that is encoded. The modulator comprises the superframe placer, encoding, framing and modulation means.

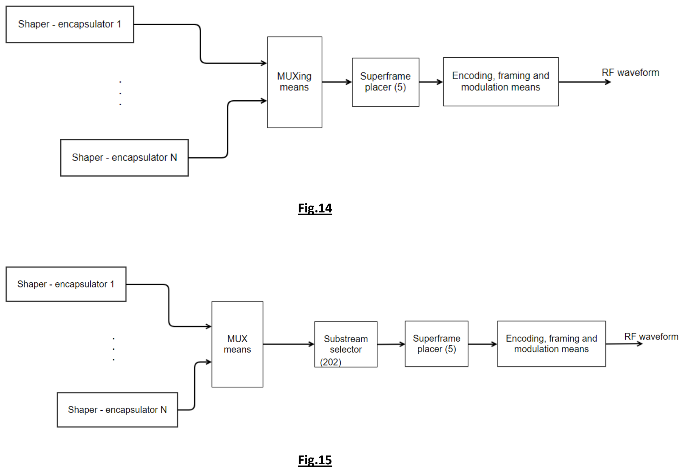

However, there are certain and important use cases where receivers do not demodulate and decode all non-dummy frames in a physical carrier (e.g. due to beam hopping, precoding, but also due to other reasons, e.g. to limit decoder throughput or power consumption in receivers). In that case, more than one satnet is served by a physical carrier, thus, more than one shaping and encapsulation means is used, after which multiplexing means (e.g., a layer 2 switch) multiplexes both substreams to a single stream of baseband frames, as shown in Fig.14. Each of the substreams then represents a virtual carrier with a virtual carrier symbol rate, as they are multiplexed with another substream of baseband frames and only the multiplexed stream is then sent at a physical carrier symbol rate. The sum of the virtual carrier symbol rates should of course not be larger than the physical carrier symbol rate. This method of multiplexing virtual carriers in a single physical carrier could be preferred to avoid using two physical carriers, e.g., to have a lower peak to average power ratio.

A case is now considered where some baseband frames are associated to VLSNR modcods because some terminals experience VLSNR conditions and thus need a very robust modcods to be able to demodulate and decode their data without error. Depending on the receiver implementation, a higher protection level (determining for instance how much the information bits conveyed in the PL headers are protected with redundancy and spreading) is required to demodulate and decode those frames without error, see the DVB-S2X guidelines, TR 102 376-2 V1.2.1. Hence, depending on the receiver implementation (e.g., in case of a suboptimal implementation, also the regular SNR QPSK rate 1/4 modcods could require a higher protection level), a certain group of modcods can be associated to a higher protection level. There are four protection levels, so at most four groups of modcods can be distinguished based on the PLI code. The number of groups can obviously also be limited to less than four, e.g., two. Indeed, for each superframe that is started, a new superframe preamble is needed resulting in overhead. If four groups are used, in general, more superframes are needed than in case of only two groups. As an example, one modcod group with PLI 0 (standard protection level allowing for a typical receiver successful demodulation down to roughly - 2 dB SNR) and another modcod group with PLI 2 (the most robust protection level allowing demodulation down to roughly -10 dB SNR). For the sake of this description, two groups of modcods are considered, but the invention is not limited thereto and can easily be extended to three or four groups. The modcods associated to the highest and lowest protection level are denoted VLSNR and high SNR (HSNR) modcods, respectively. A PLframe associated to a VLSNR or HSNR modcods is denoted a VLSNR or HSNR PLframes, respectively. A superframe corresponding to a high or low protection level is denoted a VLSNR and HSNR superframe, respectively.

In the case of a mixture of VLSNR and HSNR modcods, meaning that some baseband frames are associated to a VLSNR modcod and other baseband frames are associated to a HSNR modcods, the superframe placer has the choice : either a VLSNR superframe is maintained with high protection level (to have less superframes and thus less overhead from superframe preambles, but more overhead from longer PLHeaders) and multiplex HSNR and VLSNR PLframes in this VLSNR superframe, or VLSNR and HSNR PLframes are put in VLSNR and HSNR superframes, respectively (to have less overhead from spread PLHeaders for HSNR PLframes by putting those in HSNR superframes).

Advantageously, the shaping and encapsulation means order baseband frames in terms of robustness for a period of time. The more robust a PL frame is, the lower the SNR under which terminals can still demodulate the PL frames. One order can be that the most robust modcods are output first, with the most efficient modcods coming last. For instance, consider a period of time of 5 ms = 5e-3 seconds. The number of IQ symbols processed is consequently symbol rate * 5e-3, more specifically 1e5 symbols for 20 Mbaud, 1e6 symbols for 200 Mbaud and 2.5e6 symbols for 500 Mbaud. It is now proposed to put VLSNR and HSNR PLframes in VLSNR and HSNR superframes, respectively, together with having the baseband frames ordered in terms of robustness. Thus, the HSNR PLframes can be in a HSNR superframe with PLI 0 and the VLSNR PLframes can be in a VLSNR superframe with PLI 2. Indeed, the superframe preamble is based at least on the protection level indication (PLI), thus a new superframe must start to change the PLI. It is then possible to put the PLframes in that period of time in 1 (with only HSNR or only VLSNR modcods) or 2 (with VLSNR and HSNR modcods) superframes. The overhead of a new superframe preamble is 1440 symbols, which is 2.88% for 50e3 symbols and 0.29% for 500e3 symbols. The latter is achieved in case of a mixture of VLSNR and HSNR modcods, 200 Mbaud and 5 ms time period, regardless of whether there are few (resulting in a short VLSNR superframe and a very long HSNR superframe) or many (resulting in a long VLSNR superframe and a short HSNR superfarme) VLSNR modcods (as there are always 2 superframes). In general, there are at most 2 superframes, each with 1440 symbols in the superframe preamble. So, 2880 symbols overhead on 1e6 symbols (in case of 200 Mbaud and 5 ms encapsulation interval), i.e., 0.3% overhead roughly. Hence, the overhead is predictable and small, which is not the case in the prior art as described in the background section. A possible implementation of this approach is to have the shaping and encapsulation means on a server, which burst baseband frames to the modulator every encapsulation interval. The encapsulation interval can be 5 ms. As described in WO2006/099695, the shaping and encapsulation means can order such a burst of in terms of robustness, e.g., from high robustness to low robustness.

The overhead of 0.3% can be considered negligible, already achieved for 200 Mbaud. In the case of high throughput satellites (HTS) those symbol rates are often encountered. In the case of beam hopping, there is an additional postamble (180 / 900 symbols for PLIs 0 and 2, respectively) at the end of a dwell, but the added overhead from a postamble remains limited.

When the framing means notice in the metadata that a new superframe needs to be started they can derive the PLI from the modcod associated to the next XFEC frame. Alternatively, the PLI can also be signalled through the metadata attached to the stream of XFEC frames.

Two types of receivers can be distinguished here. The most advanced type of receiver can burst demodulate a superframe. This means that it has the circuits implemented to detect and verify the start of a superframe according to a configured superframe lock parameter set, with sufficiently low probability to miss a superframe (demoted probability of miss) and probability of falsely detecting a superframe where it is not present (denoted probability of false detection). A superframe lock parameter set is a set of parameters needed to lock and acquire the superframe with low probability of loss. The superframe lock parameter set comprises at least the SOSF-ID and the reference scrambling index. For formats 5 and 6, the payload scrambling index, scrambling also the SFFI and SFH, may further improve the superframe acquisition performance. For this most advanced type of receiver, the above works fine. A most low-cost type of receiver uses a continuous type of demodulator which needs several superframes to lock on the carrier and needs to know more information on the position of the superframe to have a sufficiently low probability of miss and probability of false detection. For instance, it needs to know that the superframe length is a multiple of 16 CUs (a CU is 90 symbols long, 16 CUs is 1476 symbols long as it also includes a pilot segment of 36 symbols). Consider for instance a terminal in VLSNR conditions. That terminal cannot demodulate and decode the PLHeaders in the HSNR superframes. It thus does not know how long the PL frames are and thus does not know where the new superframe could start (in the proposed method above, a new superframe could start after every PL frame). A solution could be thus to limit the possible lengths of the superframe to being a multiple of a certain amount (e.g., a multiple of 16 CUs (including a pilot segment of 36 symbols), so 1476 symbols; but it could also be a multiple of 15 CUs or another amount). This reduces the probability to falsely detect a start of superframe on all other positions. E.g., in the case of 16 CUs = 1476 symbols, it reduces the probability of false detection by a factor 1476. To achieve that, after inserting the last PL frame corresponding to one group of modcods and before starting a new superframe corresponding to another protection level to insert a PL frame of another group of modcods, the transmitter has to pad the superframe until it is a multiple of that certain amount. The DVB-S2X standard foresees a dummy type B frame that can be shortened to be included after the last PL Frame in a superframe, to adhere to the constraint of SFL = n × 1476 (in the case of superframes that are a multiple of 16 CUs), where SFL is the superframe length. The choice of 16 CUs for said amount is a bit easier for the implementation, as then the superframe length is always a multiple of 1476 symbols. With other amounts, it may depend on where the pilot segments are. In addition, superframes of format 5 that are not last in a dwell are also multiples of 16 CUs so choosing that amount would make superframes of format 5 and 6 more similar.
In fact, the above is only needed in HSNR superframes (or in general, in superframes with a protection level different from 2). A VLSNR terminal cannot decode PLHeaders of those superframes. It can decode PLHeaders from superframes with a protection level from 2 (the so-called VLSNR superframes) so that said padding with a dummy type B frame is not needed there.

Now the scenario with more than one substream (i.e., more than one virtual carrier) in a physical carrier is reconsidered. This means that receivers can decide (e.g., in case of capability constraints) to only demodulate the frames associated to a particular substream, to limit the processing requirements. In the prior art, the substream selector was also called a time slice selector. In this invention, the substreams do not require necessarily different time slice numbers as receivers could also distinguish between substreams via the superframe lock parameter set, as explained further. So naming it a substream selector is more appropriate. But in both cases (with different or not different time slice numbers in different substreams), the substreams form a virtual carrier as they are multiplexed with other substreams in a single physical carrier and as their substream is shaped to a symbol rate (which is called the virtual carrier symbol rate). As explained in WO2020/065043 A1 and US2023/123805, a shaper-encapsulator shapes a virtual carrier symbol rate, per virtual carrier. The sum of the symbol rates of the virtual carriers is smaller than or equal to the symbol rate of the physical carrier, as was visualized in Fig.3. An input block, called a time slice selector (generalized to a substream selector in this invention), in the modulator buffers the baseband frames bursts to the modulator from each of the shaper-encapsulators and multiplexes those frames onto a single stream of baseband frames that is encoded, framed and modulated by the encoding, framing and modulation means. One of the tasks of the substream selector can be to avoid any instantaneous throughput constraint imposed on each of the substreams.

In some embodiments of the invention the superframe placer is located at least after the substream selector (202) to still act on a single stream of baseband frames, after the multiplexing by the substream selector is performed, as shown in Fig.15.

An additional task of the substream selector (202) can be to avoid too much latency for any of the input streams. Thus, from the baseband frames associated to substreams where the instantaneous throughput constraint is not violated, the substream selector can select the baseband frame that is stored longest ago.

As shown in Fig. 9, in the case of multiplexing more than one substream in a physical carrier and in the presence of VLSNR modcods in one or more of those substreams, there can be many alternations between VLSNR and HSNR PLframes. As baseband frames from both substreams (or virtual carriers) can be interleaved to satisfy throughput constraints, ordering modcods per satnet in terms of robustness is not sufficient to limit the overhead to two superframe preambles per encapsulation time interval, in contrast to the case with one satnet per physical carrier. Therefore, in the presence of VLSNR and in the case where the instantaneous throughput per substream is constrained, it can be more efficient to use two separate physical carriers each with a single substream. Without VLSNR modcods, baseband frames from both substreams can be mixed in the same superframe without excessive overhead. The superframe length can then be determined based on a configurable maximum superframe length for instance, which should be big enough to make the overhead from the superframe preamble negligible.

In the case of beam hopping or precoding, receivers should only demodulate or decode the time fractions of the physical carrier for which the signal-to-noise ratio (SNR) is good. In the case of beam hopping, the SNR is bad for the time fractions where the satellite illuminates other coverages. For precoding, the SNR is bad for the time fractions where the transmitter uses a precoding matrix to eliminate or reduce interference for other terminals or other terminal groups (which experience a different interference as they are located elsewhere). Reducing interference for another terminal or terminal group does not mean that the interference for the considered terminal is reduced. Indeed, demodulating time fractions of the physical carrier with worse SNR could have several negative and thus undesired side effects. For instance, the terminal could signal in the control plane suddenly worse SNRs to the hub and ACM may interpret that as a fade and significantly reduce (i.e., take a more robust modcod) the modcod (modulation and coding) used for that terminal. Also several demodulator loops, such as the AGC (automatic gain control) and equalizer tap determination loops could be severely impacted when being used on time fractions with worse SNR, with undesired performance degradation on the desired time fractions with good SNR as a consequence, as those loops are too slow to be immediately restored on those good SNR time fractions. It is therefore absolutely desirable that receivers only demodulate or decode the time fractions of the physical carrier for which it has a good SNR. Also for receivers with the requirement to consume as little energy as possible (e.g. battery packed terminals), it is desired to only demodulate and decode time fractions of the physical carrier where it has data.

All of this can be achieved by a transmission system architecture that serves, consecutively in time, disjunct sets of terminals, where each disjunct set is associated with a different superframe lock parameter set. Superframe lock parameter sets are different when having at least one parameter different. A superframe lock parameter set is a set of parameters needed to lock and acquire the superframe with low probability of loss. The superframe lock parameter set comprises at least the SOSF-ID and the reference scrambling index. For formats 5 and 6, the payload scrambling index, scrambling also the SFFI and SFH, may further improve the superframe acquisition performance. Hence, in the above scenarios, when transitioning from sending data to one group of terminals to sending data to another disjunct group of terminals, a new superframe should start, defined by a new superframe lock parameter set, different from the previously used set. Typically (but not necessarily) the superframe format and pilot ID are considered constant per physical carrier, and known by the system, transmission system and receivers. For instance, one could have chosen to adopt superframe format 5. In another implementation format 6 or 7 may be preferable in certain use cases.

Depending on the receiver architecture, it may be needed to change at least the reference scrambling index. In another implementation of the receiver, it may be sufficient to only change the SOSF-ID. It may be safest to change both the SOSF-ID as the reference scrambling index between different superframe lock parameter sets. Also changing the payload scrambling index may further improve the superframe acquisition performance and reduce the probability of false detections on other time fractions, as one or more of the SFFI and SFH can be used as well to acquire the superframe with the correct superframe lock parameter set.

Receivers from a group of terminals are configured with a particular superframe lock parameter set so that they can demodulate the appropriate superframes (those using a superframe preamble based on that particular superframe lock parameter set) with good SNR. Before changing the superframe lock parameter set in the transmitter when starting a new superframe, it can be advantageous to include a postamble. Receivers can detect the postamble and thus be informed to stop "tracking" (e.g., stopping the AGC and equalizer loops) the carrier and look for a new superframe preamble matching the superframe preamble determined by their particular superframe lock parameter set. The DVB-S2X standard also foresees a way, in case of beam hopping, to signal the last PL frame in a dwell with the u7 bit from the PLS code. Hence, next to signalling when a postamble needs to be inserted, the superframe placer can optionally also signal when the u7 bit should be 1 to signal the last PL frame in a dwell.

A common receiver processing architecture is to perform non-coherent correlations with a predefined scrambled SOSF sequence during the acquisition of the carrier of interest, e.g., to be able to operate under larger frequency offsets. When using the same reference scrambling ID, only a limited number of SOSF-IDs result in good orthogonality under non-coherent correlations. It can actually be shown that for a subblock length of S = 15, at most 15 SOSF-indices can be found which have good correlation properties between each other under scrambling by the same reference scrambler. If the number of cells is larger than that limited number of SOSF-IDs, false lock on non-desired frames (destined to other cells) during the time-aligning synchronization phase can occur. Furthermore, it is not desirable to have a constraint on the number of cells based on the receiver processing architecture. To avoid false lock on non-desired frames (destined to other cells) during the time-aligning synchronization phase, a different reference scrambler ID should be used. The choice of the SOSF-ID is then not very important in the case of beam hopping and can be different or the same. A terminal receiver can thus have one or more demodulators configured with the dedicated pair of SOSF-ID and reference scrambling index for its cell, thus only locking on its own frames, also in the time alignment synchronization phase of beam hopping.

Receivers advantageously also use the superframe format indicator (SFFI) field for improving the acquisition. The SFFI field is scrambled by the payload scrambler. Hence, for the same reason as above, the payload scrambler ID for different cells should be taken differently. More specifically, payload scramble IDs can be found that provide near-orthogonality of the full 450 symbol SFFI field.

Obviously, as terminals from one group do not demodulate or decode superframes from other groups, the superframes from a group cannot contain any data from another group. So, the data substreams to different terminal groups must form separate virtual carriers with its own shaping and encapsulation means. In other words, each data substream is s0haped and encapsulated separately. As mentioned in the background section, a modular, simple, high efficiency and cost-efficient method is described to exploit time slicing is disclosed in WO2020/065043 A1 and US2023/123805. Per satnet, a shaper-encapsulator shapes a symbol rate of a virtual carrier. The sum of the symbol rates of the virtual carriers is smaller than or equal to the symbol rate of the physical carrier, as visualized in Fig.3. An input block, called a time slice selector, in the modulator buffers the baseband frames burst to the modulator from each of the shaper-encapsulators and multiplexes those frames onto a single stream of baseband frames that is encoded, framed and modulated by the encoding, framing and modulation means. One of the tasks of the time slice selector can be to avoid any throughput constraint imposed on each of the time slices without creating too much latency for any of the input streams. Fig.4 visualizes such an architecture. This architecture can be leveraged, but with the time slice selector replaced by a substream selector. Indeed, it would be possible to use the same time slice numbers for different substreams as receivers locking on one substream (through the superframe lock parameter set associated to that substream) do not even see the frames to other substreams as they do not even lock on those time fractions. Thus, the time slice numbers in other substreams could be the same in that case, as the time slices are not used at the receiver to discard frames, which is now done through the superframe lock parameter set. So, a time slice selector would be a wrong name as the substreams are not necessarily associated to disjunct time slice numbers. Therefore it is called a substream selector in this invention.

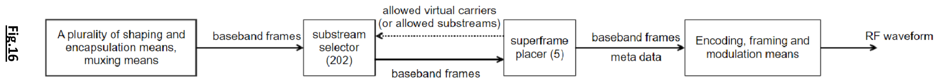

Thus, according to WO2020/065043 A1 and US2023/123805, the substream selector determines when a baseband frame from a substream or virtual carrier is multiplexed on the single stream of baseband frames that is consequently encoded, framed and modulated. In addition to WO2020/065043 A1 and US2023/123805, the decision on when to take which substream or virtual carrier should take into account the beam hopping plan in the case of beam hopping, or which precoding matrix is used in the case of precoding. It is an aspect of this invention that the superframe placer orchestrates this. Thus, in the case of beam hopping, the superframe placer is configured with the beam hopping plan. It can then inform the substream selector which substreams or virtual carriers are allowed, related to the coverage or cell that is presently illuminated. Only the substreams or virtual carriers related to terminals in the illuminated coverage or cell are allowed. Similarly, in the case of precoding, a time plan can be imposed by the superframe placer, in order to multiplex in the same physical carrier more than one terminal group precoded by different precoding matrices. Fig.16 provides an illustration.

As precoding involves more than one physical carrier, and the superframes across carriers should be aligned, the time plan thus imposes a fixed length to the superframes with data in the case of precoding. Hence, the superframe placer is not only attaching metadata to the single stream of baseband frames, indicating when a new superframe needs to start, indicating the superframe lock parameter set, indicating when a postamble needs to be inserted (i.e., when the next superframe lock parameter set is different from the previous). It is also imposing to the substream selector which virtual carriers are allowed to choose the next baseband frame from as done by the substream selector. The superframe placer is thus located after the substream selector, seeing a single stream of baseband frames, but with an interface to the substream selector to impose a set of allowed virtual carriers. In case there is no baseband frame available in the set of allowed virtual carriers, the substream selector can then indicate to insert a dummy frame, similar as explained in WO2020/065043 A1 and US2023/123805. In Annex E from DVB-S2X, additional types of dummy frames (dummy type A and B frames) are standardized.

The most simple implementation is obviously achieved when the superframe placer is immediately adjacent to the substream selector in the transmission system, in which case there is no time difference between the single stream seen at the input of the superframe placer and the selected baseband frame at the output of the substream selector. The superframe placer can then easily just decide which virtual carrier is allowed next given the current virtual carrier served now.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Transmission system (1) arranged for generating a signal to be transmitted via one or more physical carriers to a plurality of earth station receivers of a satellite communication system, at least one of said physical carriers comprises a single stream of baseband frames, said transmission system comprising :
- means for shaping and encapsulation arranged for outputting said single stream of baseband frames as a burst signal, each baseband frame in said single stream being associated to a modulation and coding, modcod, said baseband frames being ordered in terms of robustness,
- encoding means (10) arranged to convert per physical carrier said single stream of baseband frames into a single stream of XFEC frames according to the DVB-S2X standard, said modcods being arranged in at least two groups, each group having an associated protection level indication;
- framing means (20) arranged to convert per physical carrier said single stream of XFEC frames to a single stream of IQ symbols according to the DVB-S2X standard, said single stream of IQ symbols comprising one or more superframes according to the DVB-S2X standard, each superframe comprising at least a superframe preamble;
- modulation means (30) arranged to convert per physical carrier said single stream of IQ symbols at a physical carrier symbol rate into IQ samples to generate said signal to be transmitted;
said transmission system further comprising a superframe placer arranged to attach to said stream of baseband frames or said single stream of XFEC frames metadata indicating to said framing means when a superframe preamble needs to be inserted in said stream of IQ symbols being composed in said framing means,
said framing means being arranged to insert a new superframe preamble when a superframe comprising an XFEC frame with a modcod from one of said groups ends and a subsequent superframe comprises an XFEC frame with a modcod from another group and a protection level indication associated to said other group of modcods is detected in said metadata, said framing means being arranged to insert a shortened dummy type B frame before inserting a new superframe preamble in order to adhere to a superframe length being a multiple of a predefined number.

2. Transmission system as in claim 1, wherein at least one of said physical carriers comprises more than one substreams of baseband frames, the transmission system comprising more than one means for shaping and encapsulation, each substream of baseband frames being generated by one of said means for shaping and encapsulation and multiplexing means to multiplex said more than one substreams of baseband frames to said single stream of baseband frames that is fed to said encoding means or said superframe placer and each substream comprising data traffic to a different subset of earth station receivers.

3. Transmission system as in claim 2, wherein said modulation means further comprises a substream selector (202) arranged for receiving and storing said plurality of baseband frames of said substreams outputted by said means for shaping and encapsulation, for selecting a stored baseband frame of said substreams from a list of allowable substreams as next frame to be multiplexed on said single stream of baseband frames, said substream selector providing said single stream of baseband frames.

4. Transmission system as in claim 3, wherein said selected baseband frame is the baseband frame from said list of allowable substreams that was stored longest ago.

5. Transmission system as in any of the previous claims, wherein said metadata comprises said protection level indication for said at least two groups.

6. Transmission system as in any of the previous claims, wherein said inserting of shortened dummy type B frames is done only for superframes with a protection level different from 2.

7. Transmission system as in any of the previous claims, wherein one or more of said one or more physical carriers are arranged to serve consecutively in time disjunct sets of terminals, each of said disjunct set of terminals arranged to demodulate and decode one or more of said substreams and associated to a superframe lock parameter set, wherein there is at least one superframe parameter different between two superframe lock parameter sets and wherein said metadata contains an indication of which superframe lock parameter set to use.

8. Transmission system as in claim 7, wherein said superframe lock parameter set comprises at least the Start-of-Superframe ID and reference scrambling ID.

9. Transmission system as in any of claims 3 to 8, wherein said superframe placer (5) is positioned between said substream selector (202) and said encoding means (10).

10. Transmission system as in claim 9, wherein said superframe placer is arranged to indicate to said substream selector that only substreams in an allowed subset of substreams according to a configurable time plan are allowed.

11. Transmission system as in any of claims 7 to 10 with more than one physical carrier, where the transmission system is arranged to align in time the moment when the superframe preamble is inserted in each of the physical carriers and where said IQ symbols are precoded with a precoding matrix based on the substreams associated to the in time aligned superframes.

12. Transmission system as in any of claims 7 to 10, wherein said disjunct sets of terminals each correspond to a different cell of a plurality of cells to be illuminated consecutively in time by a beam hopping satellite according to a beam hopping plan, and wherein said superframe placer is configured with said given time plan corresponding to said beam hopping plan indicating an order in which said plurality of cells is to be illuminated.

13. Transmission system as in claims 7 to 12, wherein said metadata comprises an indication to said framing means that a superframe postamble is to be inserted before transitioning from one subset of substreams associated to one superframe lock parameter set to another subset of substreams associated to another superframe lock parameter set.
